# EUROPÄISCHE PATENTSCHRIFT

(11) **EP 1 450 987 B1**
(45) Veröffentlichungstag und Bekanntmachung des Hinweises auf die Patenterteilung: **08.06.2005**
(21) Anmeldenummer: 02785377.9
(22) Anmeldetag: 08.11.2002
(51) Int. Cl.: B24C 1/08, B24C 1/00, B23P 6/00

(54) **VERFAHREN UND VORRICHTUNG ZUR GLÄTTUNG DER OBERFLÄCHE EINER GASTURBINENSCHAUFEL**
METHOD AND DEVICE FOR POLISHING THE SURFACE OF A GAS TURBINE BLADE
PROCEDE ET DISPOSITIF POUR POLIR LA SURFACE D'UNE AUBE DE TURBINE A GAZ

(30) Priorität: 05.12.2001 EP 01128915
(43) Veröffentlichungstag der Anmeldung: 01.09.2004
(73) Patentinhaber: Siemens Aktiengesellschaft, 80333 München (DE)
(72) Erfinder: BUBLATH, Boris, 13581 Berlin (DE); ELBING, Felix, 14129 Berlin (DE); KRIEG, Mark, 13505 Berlin (DE); REICH, Gerhard, 10717 Berlin (DE); REICHE, Ralph, 13465 Berlin (DE); SETTEGAST, Silke, 10439 Berlin (DE)
(86) Internationale Anmeldenummer: PCT/EP2002/012520
(87) Internationale Veröffentlichungsnummer: WO 2003/047814

(56) Entgegenhaltungen:
- WO-A-01/17726
- WO-A-97/31752
- US-A- 3 676 963
- US-A- 4 038 786

## Beschreibung

### Gebiet der Erfindung

Die Erfindung liegt auf dem Gebiet der Gasturbinenschaufeln und betrifft ein Aufbringen oder Wiederherstellen einer Schutzschicht oder eines Schutzschichtsystems auf Gasturbinenschaufeln. (siehe z.B. WO-A-97 31752).

### Hintergrund zur Erfindung

Schutzschichtsysteme auf Gasturbinenschaufeln zeigen z.B. die US 4,321,310, die US 4,676,994 oder die US 5,238,752. Gasturbinenschaufeln sind sehr hohen Temperaturen ausgesetzt. Um die nötige Hochtemperaturfestigkeit aufzuweisen sind sie daher aus hochtemperaturfesten Werkstoffen gefertigt. Insbesondere kommen hier Superlegierungen auf Nickel- oder Kobaltbasis in Frage. In der Regel wird auf den Grundkörper einer solchen Gasturbinenschaufel noch eine Schutzschicht oder ein Schutzschichtsystem gegen Oxidation, Korrosion und/oder zur Wärmedämmung aufgebracht. Besonders geeignet ist hier eine metallische Legierung der Art MCrAlY, wobei M für ein Element aus der Gruppe (Fe, Co, Ni) steht, Cr Chrom ist, Al Aluminium ist und Y für Yttrium oder ein Element der Seltenen Erden steht. Auf eine solche Korrosionsschutzschicht wird häufig eine keramische Wärmedämmschicht aufgebracht. Diese ist hoch temperaturbeständig und dient der Abschirmung des metallischen Grundkörpers vor dem direkten Kontakt mit dem Heißgas. Ein typisches Material für eine keramische Wärmedämmschicht ist Yttrium-stabilisiertes Zirkondioxid, welches z.B. durch atmosphärisches Plasmaspritzen (APS) aufgebracht wird.

Eine solche Korrosionsschutzschicht wird häufig durch ein Plasmaspritzverfahren aufgebracht. Hierdurch weist sie eine vergleichsweise hohe Rauhigkeit auf, die unerwünscht ist. Es ist daher notwendig, die metallische Schutzschicht zu glätten. Dies erfordert entweder einen zeitaufwendigen Gleitschleifprozess, bei dem die Gasturbinenschaufel in einem Trog mit Schleifkörpern lange Zeit bewegt wird, bis sich die gewünschte Rauhigkeit eingestellt hat. Oder es wird ein Sandstrahlverfahren angewandt, bei dem Festkörperpartikel, insbesondere Korundkörner, aus einem Strahl auf die Oberfläche gelenkt werden und dabei die Oberfläche glätten. Das Gleitschleifen ist nicht nur zeitaufwendig, es besteht auch die Gefahr eines vorlaufenden, unkontrollierten Abtrags an freistehenden Kanten. Die bekannten Sandstrahlverfahren bergen insbesondere den Nachteil, das Festkörperpartikel des Strahles in der Schutzschicht eingeschlossen werden können und damit die Oberflächenqualität inakzeptabel verringern.

Die US 5,645,893 betrifft ein beschichtetes Bauteil mit einem Grundkörper aus einer Superlegierung sowie mit einer Haftvermittlerschicht und einer Wärmedämmschicht. Die Haftvermittlerschicht weist ein Platinaluminid sowie eine daran sich anschließende dünne Oxidschicht auf. Die dünne Oxidschicht weist Aluminiumoxid auf. An diese Oxidschicht grenzt die Wärmedämmschicht an, welche mittels dem Elektronenstrahl-PVD-Verfahren aufgebracht wird. Dabei wird mit Yttrium stabilisiertes Zirkoniumoxid auf die Haftvermittlerschicht aufgebracht. Vor dem Aufbringen der Haftvermittlerschicht wird die Oberfläche des Grundkörpers mittels eines Grob-Sandstrahlverfahrens gereinigt. Zur materialabtragenden Bearbeitung des Grundkörpers wird dabei Aluminiumoxidsand eingesetzt.

Eine weitere Maßnahme für die Eignung des Einsatzes einer Gasturbinenschaufel bei sehr hohen Temperaturen ist eine Kühlung mittels Kühlluft. Diese wird in einen inneren Hohlraum der Gasturbinenschaufel geführt, von wo sie Wärme aufnimmt. In der Regel wird diese Kühlluft zumindest teilweise aus Kühlluftbohrungen an die Oberfläche der Gasturbinenschaufel geführt, wo sie einen schützenden Film bildet. Die Kühlluftbohrungen werden im oberflächennahen Bereich elektrochemisch erodiert oder mittels eines Laserstrahles gebohrt, wie in der US 5,609,779 gezeigt. Das Bohren mittels Laserstrahl bietet einen Zeit- und Kostenvorteil, führt aber häufig durch die thermische Einwirkung zur Bildung von Graten und Kontaminationen aus an- oder umgeschmolzenen Partikeln. Schon aufgrund der genau einzuhaltenden Geometrie der Filmkühlbohrungen müssen diese Grate entfernt werden, was bisher einen aufwendigen, handgeführten Prozess erforderte.

In der US 3676 963 ist ein Verfahren zur Entfernung unerwünschter Bereiche von thermoplastischen oder elastischen Materialien insbesondere in inneren, schwer zugänglichen Bereichen mittels eines Eisstrahles beschrieben. Eine entsprechende Anwendung mittels Trockeneis, also festem CO2, offenbart die US 3 702 519. Der Abtrag der unerwünschten Bereiche geschieht durch ein Unterkühlen und damit Verspröden der Kunststoffbereiche durch kalte CO₂-Partikel , die dann durch weitere Partikel abgetragen werden.

Die DE-A-205 87 66 zeigt ein Reinigungsverfahren für metallische, radioaktiv verseuchte Oberflächen mittels eines Eisstrahles. Für leicht lösliche Niederschläge auf der Oberfläche wird auch eine Verwendung von Trockeneis vorgeschlagen.

Die US 4 038 786 und die korrespondierende DE-A-254 30 19 offenbaren eine Vorrichtung, mit der ein Trockeneisstrahl mit günstiger Teilchengröße und -form ohne Verklumpungen der Teilchen erzeugbar ist.

Die DE-C-196 36 305 zeigt ein Verfahren zur Beseitigung von Beschichtungen und Belägen von einem empfindlichen Untergrund. Es geht um Beläge wie Ruß, Moos, Schadstoffablagerungen und hochviskose, nicht schlagfeste oder schlagzähe Beschichtungen von Untergründen wie Holz, Kunststoffschäume oder Sandstein. Mittels eines Trockeneisstrahles ist ein schonendes Entfernen der Beläge oder Beschichtungen von den empfindlichen Untergründen möglich.

Vergleichbare Anwendungen des Trockeneisstrahlens, etwa zum Entfernen von Silikondichtungen oder Lacken zum Beispiel von Kunststoffformteilen oder anderen, formkritischen Grundkörpern sind in den folgenden Artikeln beschrieben: "Trockeneis-Strahlreinigen", A. Buinger, Kunststoffe 86 (1996) 1, S.58; "CO2 blast cleaning", Ken Lay, Rubber Technology International '96, S. 268-270; "Reinigen mit Trockeneisstrahlen in der Austauschmotorenfertigung", Eckart Uhlmann, Bernhard Axmann, Felix Elbing, VDI-Z 140 (1998) 9, S.70-72; "Dry-ice blasting for cleaning: process, optimization and application", G. Spur, E. Uhlmann, F. Elbing, Wear 233-235 (1999) S.402-411; "Stoßkraftmessung beim Strahlen mit CO₂-Pellets", Eckart Uhlmann, Bernhard Axmann, Felix Elbing, ZWF 93 (1998) 6 S. 240-243.

### Darstellung der Erfindung

Die Erfindung stellt ein Verfahren zum Entfernen von keramischem Material von der Oberfläche einer Gasturbinenschaufel gemäß Patentanspruch 1 bereit, wobei die Gasturbinenschaufel eine metallische Hochtemperatur-Korrosionsschutzschicht aufweist, auf die eine keramische Wärmedämmschicht aufgebracht ist. Bei dem Verfahren wird ein Trockeneisstrahl aus Trockeneispartikeln über die Oberfläche geführt wird, sodass durch die Einwirkung der auftreffenden Trockeneispartikel Material von der keramischen Wärmedämmschicht abgetragen wird.

Der Erfindung liegt die überraschende Erkenntnis zugrunde, dass das Trockeneisstrahlen geeignet ist, eine keramische Wärmedämmschicht abzutragen.

Die bisherigen Anwendungen des Trockeneisstrahlens beruhten maßgeblich auf einer thermo-mechanischen Einwirkung auf eine eher weiche Beschichtung. Ein solcher Belag oder eine Beschichtung wird durch Kälteversprödung und anschließender kinetischer Einwirkung stückweise durch ein Abplatzen abgetragen. Eine keramische Wärmedämmschicht besteht demgegenüber aus einem harten, widerstandsfähigen Material. Darüber hinaus ist eine keramische Wärmedämmschicht gerade dafür ausgelegt, Temperaturwechsel und thermische Spannungen auszuhalten. Hierzu wird üblicherweise eine stengelförmige Struktur aufgebaut, die die Kompensation thermischer Querspannungen erlaubt. Die keramische Wärmedämmschicht sollte somit eigentlich gerade gegen thermo-mechanische Abtragungsversuche unempfindlich sein.

Durch eine Abtragung mittels Trockeneis wird eine Kontamination durch Fremdstoffe vermieden. Zudem wird der metallische Grundkörper der Gasturbinenschaufel nicht beeinträchtigt, es erfolgt keinerlei Abtrag bei der Hochtemperatur-Korrosionsschutzschicht.

Die Oberfläche der Gasturbinenschaufel lässt sich somit einfach und qualitativ hochwertig sowohl glätten oder entgraten als auch völlig von der keramischen Wärmedämmschicht befreien.

Durch eine Glättung mittels eines Trockeneisstrahles wird einerseits der Zeit- und Kostenvorteil eines Sandstrahlverfahrens etwa gegenüber einem Gleitschleifverfahrens erreicht. Andererseits wird aber der wesentliche Nachteil eines konventionellen Sandstrahlverfahrens vermieden, nämlich eine Kontamination der Schaufeloberfläche mit Partikeln des Sandstrahls. Die Trockeneispartikel sublimieren nach dem Auftreffen sofort und rückstandsfrei, so dass keinerlei Einlagerung oder chemische Reaktion erfolgt. Weiterhin verbleiben keine zu entsorgenden Strahlreste.
A) Die keramische Wärmedämmschicht weist vorzugsweise Zirkondioxid auf, weiter bevorzugt ist sie vollständig aus Yttriumstabilisiertem Zirkondioxid gebildet.
B) Das erfindungsgemäße Verfahren kann insbesondere auch bei einer Wiederherstellung eines Schichtsystems (Refurbishment) einer Gasturbinenschaufel angewendet werden. Dazu wird die gesamte alte keramische Wärmedämmschicht entfernt.
C) Vorzugsweise wird durch das Glätten ein vorbestimmter maximaler Rauhigkeitswert der Oberfläche eingestellt. Der maximale Rauhigkeitswert einer mittleren Rauhigkeit ist bevorzugt kleiner als 30 µm, weiter bevorzugt kleiner als 15 µm.
D) Wie oben ausgeführt münden häufig an der Oberfläche Kühlluftbohrungen. Herstellungsbedingt verbleiben häufig Grate im Mündungsbereich und zwar insbesondere aus umgeschmolzenem Material wenn die Bohrungen mittels Laserstrahl gebohrt sind. Vorzugsweise werden diese Grate mittels des Trockeneisstrahles entfernt.
E) Vorzugsweise wird die Glättung voll automatisiert durchgeführt. Durch eine mehrachsige Halterung der Gasturbinenschaufel oder eine mehrachsige Führung es Trockeneisstrahles ist es möglich, jeden zu glättenden Bereich der Oberfläche zu erreichen.
F) Bevorzugt verläßt der Trockeneisstrahl eine Düse unter einem Druck von 10 bar bis 30 bar.

Die Ausführungen der Abschnitte A) bis F) können auch miteinander kombiniert werden.

Die Erfindung stellt auch eine Vorrichtung bereit, zur Entfernung von keramischem Material einer keramischen Wärmedämmschicht auf der Oberfläche einer Gasturbinenschaufel, mit einer Halterung für die Gasturbinenschaufel und mit einer Düse zur Emission eines Trockeneisstrahles, sowie mit einer mehrachsigen Manipulationseinrichtung zur relativen Bewegung des Trockeneisstrahles gegenüber der Gasturbinenschaufel in der Weise, das ein vollständig automatisiertes Entfernen des keramischen Materials der Gasturbinenschaufel ermöglicht wird.

### Detaillierte Beschreibung der Erfindung

Bevorzugtermaßen wird mit dem Trockeneisstrahl auch eine Reinigung der Gasturbinenschaufel durchgeführt. Eine solche Reinigung ist insbesondere vor einem Beschichten einer Gasturbinenschaufel durchzuführen. Jede Verunreinigung kann die Haftung der aufzubringenden Beschichtung beeinträchtigen. Bei herkömmlichen Reinigungsverfahren besteht die Gefahr, über das verwendete Reinigungsmittel, etwa Sand beim Sandstrahlen, Fremdmaterial in die zu reinigende Oberfläche einzuschließen. Durch die Verwendung eines Trockeneisstrahles wird diese Gefahr vermieden, da das Trockeneis rückstandsfrei sublimiert.

Die Erfindung wird im folgenden anhand eines Ausführungsbeispieles näher erläutert. Es zeigen teilweise schematisch und nicht maßstäblich:
- FIG 1: eine Vorrichtung zum Entfernen von keramischem Material von einer Gasturbinenschaufel,
- FIG 2: ein Längsschnitt durch einen Oberflächenbereich einer Gasturbinenschaufel mit einem Schutzschichtsystem und

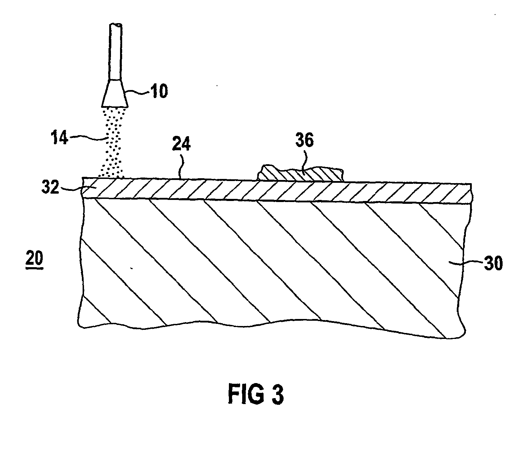

- FIG 3: ein Verfahren zum Entfernen von keramischem Material von einer Gasturbinenschaufel.

Gleiche Bezugszeichen haben in den Figuren die gleiche Bedeutung.

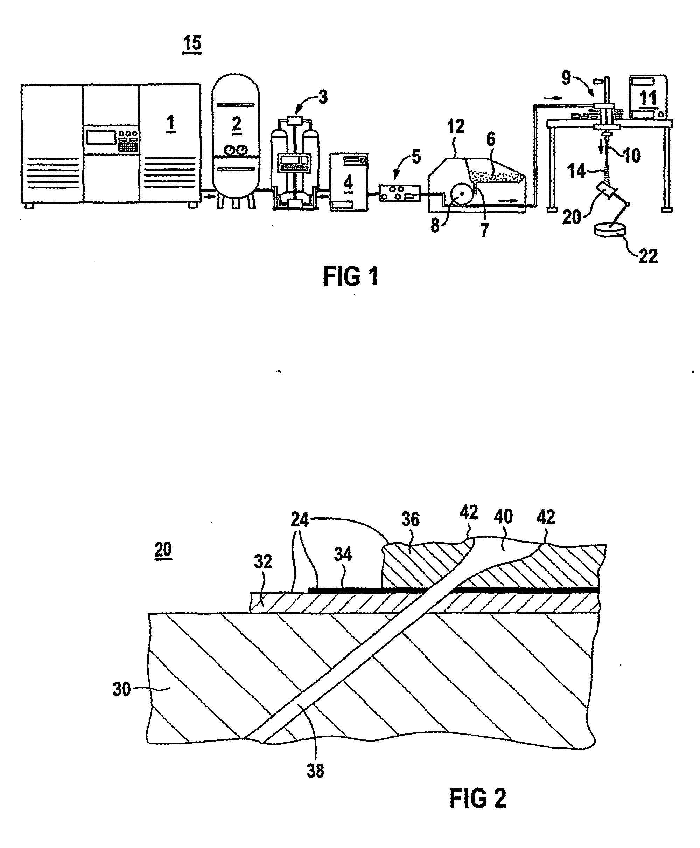

In Figur 1 ist eine Vorrichtung 15 zum Entfernen von keramischem Material von der Oberfläche einer Gasturbinenschaufel 20 gezeigt. Zur Erzeugung eines Druckluftstromes sind hintereinander geschaltet ein Schraubenkompressor 1, ein Ausgleichsbehälter 2, ein Adsorptionstrockner 3, ein Kühler 4 und ein Meßsystem 5. Im Schraubenkompressor 1 wird Luft hoch verdichtet, insbesondere auf einen Druck von 3 bis 12 bar. Der Ausgleichsbehälter 2 dient der Stabilisierung eines konstanten Massenstromes. Im Adsorptionstrockner 3 wird die Luft getrocknet und im Kühler 4 abgekühlt. Ein Messsystem 5 dient der Erfassung der Druckluftparameter.

Der Druckluftstrom wird sodann einer Pelletversorgunseinrichtung 12 zugeführt. In dieser sind Trockeneispellets 6 gelagert. Die Trockeneispellets 6 werden mittels eines Schneckenförderers 7 über eine Zellradschleuse 8 dem Druckluftstrom zugeführt und mit diesem einer mittels eines Roboters 9 beweglichen Lavaldüse 10 zugeführt. Dort treten sie als Trokkeneisstrahl 14 mit nahezu Schallgeschwindigkeit aus und treffen auf eine Gasturbinenschaufel 20. Die Gasturbinenschaufel 20 ist in einer mehrachsigen Halterung 22 gelagert, so dass der Trockeneisstrahl 14 auf jeden Punkt der Oberfläche der Gasturbinenschaufel 20 geleitet werden kann.

In Fig 2 ist ein Längsschnitt durch den Oberflächenbereich einer Gasturbinenschaufel 20 gezeigt. Auf einen Grundkörper 30 aus einer Nickel- oder Kobaltbasis-Superlegierung ist eine MCrAlY Korrosionsschutzschicht 32 aufgebracht. Auf dieser ist eine dünne Haftvermittlerschicht 34 gebildet. Die Haftvermittlerschicht 34 verbessert die Anbindung einer auf die Korrosonschutzschicht 32 aufgebrachten keramischen Wärmedämmschicht 36 aus Yttrium stabilisiertem Zirkondioxid.

Von einem nicht dargestellten inneren Hohlraum der Gasturbineschaufel 20 führt ein Kühlkanal 38 an die Oberfläche 24 der Gasturbinenschaufel 20. In Oberflächennähe ist ein trapezförmiger Mündungsbereich 40 gebildet. Der Mündungsbereich 40 ist mittels eines Laserstrahles gebohrt, was zu Aufschmelzung von Material führt. Hierdurch ist ein Grat 42 gebildet, der entfernt werden muß. Dies geschieht mittels des Trockeneisstrahles 14.

Bei einem Refurbishment einer bereits länger eingesetzten Gasturbinenschaufel 20 wird die keramische Wärmedämmschicht 36 erneuert. Hierzu wird die keramische Wärmedämmschicht 36 oder Reste hiervon mittels des Trockeneisstrahles 14 vollständig entfernt.

Je nach Einstellung der Trockeneisstrahlhärte kann aber auch ein teilweiser Abtrag erfolgen, so dass die Oberfläche 24 durch den Trockeneisstrahl 14 auf eine vorbestimmte Rauhigkeit geglättet wird.

## Patentansprüche

1. Verfahren zum Entfernen von keramischem Material von der Oberfläche (24) einer Gasturbinenschaufel (20) mit einer metallischen Hochtemperatur-Korrosionsschutzschicht (32), auf die eine keramische Wärmedämmschicht (36) aufgebracht ist, **dadurch gekennzeichnet, dass** ein Trockeneisstrahl (14) aus Trockeneispartikeln über die Oberfläche (24) geführt wird, so dass durch die Einwirkung der auftreffenden Trockeneispartikel Material von der keramischen Wärmedämmschicht (36) abgetragen wird.

2. Verfahren nach Anspruch 1, bei dem die keramische Wärmedämmschicht (36) Zirkondioxid aufweist.

3. Verfahren nach Anspruch 1, bei dem durch den Abtrag des keramischen Materials eine Glättung der keramischen Wärmedämmschicht (36) erfolgt.

4. Verfahren nach Anspruch 3, bei dem durch den Abtrag des keramischen Materials ein vorbestimmter maximaler Rauhigkeitswert der keramischen Wärmedämmschicht (36) eingestellt wird.

5. Verfahren nach Anspruch 1, bei dem durch die Oberfläche (24) ein Kühlkanal (38) führt, in dessen Mündungsbereich (40) zumindest teilweise ein herstellungsbedingter Grat (42) gebildet ist, wobei dieser Grat (42) mittels des Trockeneisstrahles (14) entfernt wird.

6. Verfahren nach Anspruch 5, bei dem der Kühlkanal (38) durch einen Laserstrahl gebildet ist.

7. Verfahren nach Anspruch 1, das voll automatisiert durchgeführt wird.

8. Verfahren nach Anspruch 1, bei dem der Trockeneisstrahl (14) eine Düse (10) unter einem Druck von 10 bar bis 30 bar verläßt.

9. Verfahren nach Anspruch 1, bei dem die keramische Wärmedämmschicht (36) vollständig durch den Trockeneisstrahl (14) entfernt wird.

10. Vorrichtung (15) zur Entfernung von keramischem Material einer keramischen Wärmedämmschicht auf einer Gasturbinenschaufel (20), mit einer Halterung (22) für die Gasturbinenschaufel (20) **gekennzeichnet durch** eine Düse (10) zur Emission eines Trockeneisstrahles (14), sowie eine mehrachsige Manipulationseinrichtung (9, 22) zur relativen Bewegung des Trockeneisstrahles (14) gegenüber der Gasturbinenschaufel (20) in der Weise, dass ein vollständig automatisiertes Entfernen des keramischen Materials ermöglicht wird.

## Claims

1. Process for removing ceramic material from the surface (24) of a gas turbine blade or vane (20) having a metallic high-temperature corrosion-resistant layer (32), to which a ceramic thermal barrier coating (36) has been applied, **characterized in that** a dry ice jet (14) of dry ice particles is passed over the surface (24), so that material is removed from the ceramic thermal barrier coating (36) by the action of the impinging dry ice particles.

2. Process according to Claim 1, in which the ceramic thermal barrier coating (36) includes zirconium dioxide.

3. Process according to Claim 1, in which the ceramic thermal barrier coating (36) is smoothed by the removal of the ceramic material.

4. Process according to Claim 3, in which a predetermined maximum roughness of the ceramic thermal barrier coating (36) is set by means of the removal of the ceramic material.

5. Process according to Claim 1, in which a cooling passage (38) leads through the surface (24), with a production-related burr (42) being formed at least in part in the opening region (40) of this cooling passage (38), the said burr (42) being removed by means of the dry ice jet (14).

6. Process according to Claim 5, in which the cooling passage (38) is formed by a laser beam.

7. Process according to Claim 1, which is carried out in fully automated fashion.

8. Process according to Claim 1, in which the dry ice jet (14) leaves a nozzle (10) at a pressure of from 10 bar to 30 bar.

9. Process according to Claim 1, in which the ceramic thermal barrier coating (36) is completely removed by the dry ice jet (14).

10. Apparatus (15) for removing ceramic material of a ceramic thermal barrier coating on a gas turbine blade or vane (20), having a holder (22) for the gas turbine blade or vane (20), **characterized by** a nozzle (10) for emitting a dry ice jet (14), and a multi-axis manipulation device (9, 22) for moving the dry ice jet (14) relative to the gas turbine blade or vane (20), in such a manner that completely automated removal of the ceramic material becomes possible.

## Revendications

1. Procédé pour éliminer de la matière céramique de la surface (24) d'une aube (20) de turbine à gaz ayant une couche (32) métallique de protection vis-à-vis de la corrosion à haute température, sur laquelle est déposée une couche (36) calorifuge en céramique, **caractérisée en ce que** l'on fait passer un jet (14) de neige carbonique constitué de particules de neige carbonique sur la surface (24) de façon à enlever par l'action des particules de neige carbonique incidentes de la matière de la couche (36) calorifuge en céramique.

2. Procédé suivant la revendication 1, dans lequel la couche (36) calorifuge en céramique comprend du dioxyde de zirconium.

3. Procédé suivant la revendication 1, dans lequel il s'effectue par l'enlèvement de la matière céramique un lissage de la couche (36) calorifuge céramique.

4. Procédé suivant la revendication 3, dans lequel on règle par l'enlèvement de la matière céramique la couche (36) calorifuge céramique à une valeur de rugosité maximum déterminée à l'avance.

5. Procédé suivant la revendication 1, dans lequel on fait passer dans la surface (24) un canal (38) de refroidissement, dans la zone (40) d'embouchure duquel est formée au moins en partie une bavure (42) de fabrication, cette bavure (42) étant éliminée au moyen du jet (14) de neige carbonique.

6. Procédé suivant la revendication 5, dans lequel on forme le canal (38) de refroidissement par un faisceau laser.

7. Procédé suivant la revendication 1, qui s'effectue d'une manière entièrement automatisée.

8. Procédé suivant la revendication 1, dans lequel le jet (14) de neige carbonique quitte une buse (10) sous une pression de 10 bar à 30 bar.

9. Procédé suivant la revendication 1, dans lequel on élimine la couche (36) calorifuge céramique complètement par le jet (14) de neige carbonique.

10. Dispositif (15) d'élimination de matière céramique d'une couche calorifuge céramique sur une aube (20) de turbine à gaz, comprenant une fixation (22) pour l'aube (20) de turbine à gaz, **caractérisée par** une buse (10) d'émission d'un jet (14) de neige carbonique, ainsi qu'un dispositif (9, 22) de manipulation à plusieurs axes pour le déplacement relatif du jet (14) de neige carbonique par rapport à l'aube (20) de la turbine à gaz de façon à permettre une élimination entièrement automatisée de la matière céramique.
